# EUROPEAN PATENT SPECIFICATION

(11) **EP 1 584 506 B1**
(45) Date of publication and mention of the grant of the patent: **08.08.2007**
(21) Application number: 05007448.3
(22) Date of filing: 05.04.2005
(51) Int. Cl.: B60H 1/00, B60H 1/32

(54) **Refrigeration system comprising a refrigerant release-to-atmosphere device**
Klimaanlage mit einer Vorrichtung zum Ablassen des Kältemittels aus dem Kältekreislauf
Climatisation comprenant un système de libération du réfrigérant hors du circuit de fluide

(30) Priority: 06.04.2004 JP 2004111693
(43) Date of publication of application: 12.10.2005
(73) Proprietor: TGK COMPANY, LTD., Tokyo 193-0942 (JP)
(72) Inventor: Tsugawa,Tokumi, Hachioji-shi, Tokyo 193-0942 (JP)
(74) Representative: Grünecker, Kinkeldey, Stockmair & Schwanhäusser Anwaltssozietät

(56) References cited:
- EP-A- 1 029 724
- EP-A- 1 040 947
- EP-A- 1 435 494
- DE-A1- 10 241 367
- US-A1- 2004 003 624
- PATENT ABSTRACTS OF JAPAN vol. 2002, no. 09, 4 September 2002 (2002-09-04) & JP 2002 147898 A (TGK CO LTD), 22 May 2002 (2002-05-22)

## Description

The invention relates to a refrigeration system, particularly for use in an automotive air conditioner containing a refrigerant gas harmful to a human body.

A typical automotive refrigeration system is known from JP 2002-147 898 A, which is considered as the closest prior art. It comprises among other components an evaporator for evaporating expanded refrigerant and for returning the refrigerant to the compressor. Although the refrigerant as used is a CFC substitute (HFC-134a) other refrigerants with a small global warming potential like e.g. carbon dioxide, HFC-152a, butane, and propane, recently have come to be demanded instead in view of global warming. However, when e.g. carbon dioxide is used in the case of the evaporator disposed in a space leading to a vehicle compartment or in a piping disposed in the vehicle compartment, there is a danger of suffocation of vehicle occupants due to oxygen deficiency, whereas when an inflammable gas, such as HFC-152a, is used as refrigerant, in case of the above-mentioned event, there is a possibility of the inflammable gas catching a fire to set the vehicle on fire, causing serious influence on the vehicle occupants, when the evaporator is broken or cracked due to aging or in an accident such that refrigerant will be released into the vehicle compartment. The expansion device is formed with a valve seat in the first refrigerant passage. A ball-shaped valve element is located upstream of the valve seat and is loaded by a spring in valve closing direction. A shaft is transmitting displacements of the power element, caused by the temperature and pressure of refrigerant in the second refrigerant passage, through the valve seat and counter to the force of the spring to the valve element, for controlling the flow rate of refrigerant through the first refrigerant passage according to temperature and pressure of the refrigerant in the second refrigerant passage.

The vehicle air-conditioning system, according to EP 1 040 947 A contains an electrically operated release-to-atmosphere device in a piping on a suction side of the compressor.

The vehicle air-conditioning system, according to US 2004/0003624 A comprises a check valve in a suction line between the evaporator and an accumulator-dehydrator. A thermal expansion device is disposed in the refrigerant line between the condenser and the evaporator.

It is an object of the invention to provide a refrigeration system with a compact expansion device and to prevent that refrigerant is released into the vehicle compartment, e.g. when an evaporator or piping disposed on the compartment side is broken.

This object is achieved by the features of claim 1.

When the evaporator is broken or when there occurs a possibility of the evaporator being broken, the opening and closing section of the expansion device is closed to isolate the evaporator from the high-pressure first refrigerant passage. At the same time the release-to-atmosphere device is caused to operate to open the piping on the suction side of the compressor to the atmosphere to dispose refrigerant in the low-pressure piping including the evaporator to the outside of the vehicle compartment. This prevents the all refrigerant in the refrigeration cycle is discharged into the vehicle compartment. The safety of vehicle occupants thus is ensured even in case of accidents.

The refrigeration system uses a normally-closed electromagnetic valve for the opening and closing section of the expansion device. Even in cases where the power supply from a battery is cut off when the vehicle falls into a state where the evaporator can be broken, the possibility remains to positively isolate the evaporator from the high-pressure piping by the then closed valve. The release-to-atmosphere device is capable of holding itself in the state open to the atmosphere even when in a de-energized state after first being electrically operated to open to the atmosphere. Refrigerant in the low-pressure piping will be released into the atmosphere even after the power supply is cut off.

An embodiment of the invention will be described with reference to the drawings. In the drawings is:
- Fig. 1: a block diagram of a basic configuration of a refrigeration system of an automotive air conditioner,
- Fig. 2: a central cross-section of an expansion device,
- Fig. 3: a central cross-section of a release-to-atmosphere device, and
- Fig. 4: a system diagram of the refrigeration system.

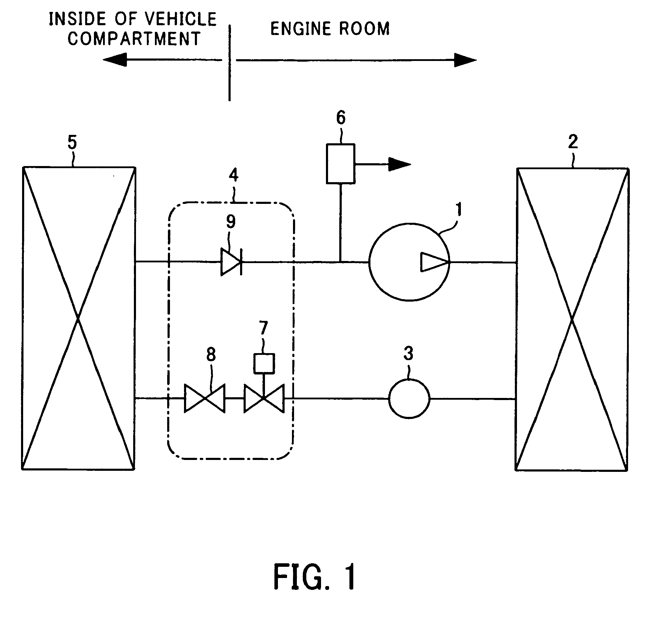

The refrigeration system in Fig. 1 comprises a compressor 1 that compresses refrigerant, a condenser 2 that condenses the compressed refrigerant, a receiver/dryer 3 that separates the condensed refrigerant into gaseous and liquid phases while temporarily storing the refrigerant circulating through the refrigeration cycle, an expansion device 4 that throttles and expands liquid refrigerant obtained by gas/liquid separation, and an evaporator 5 that evaporates the expanded refrigerant and returns the refrigerant to the compressor. In piping on the suction side of the compressor 1 a release-to-atmosphere device 6 is disposed. The expansion device 4 comprises an electromagnetic valve 7 that opens and closes piping on the inlet side of the evaporator 5, an expansion valve 8 that throttles and expands liquid refrigerant, and a check valve 9 disposed in piping on the outlet side of the evaporator 5. The electromagnetic valve 7 forms an electrically-driven opening and closing section that opens when de-energized and that closes when energized. The check valve 9 forms a backflow-preventing section that prevents backflow of refrigerant from the compressor 1 to the evaporator 5. The release-to-atmosphere device 6 holds itself in the state open to the atmosphere after being electrically operated. The compressor 1, the condenser 2, the receiver/dryer 3, and the release-to-atmosphere device 6 are arranged in an engine room of an automotive vehicle. The evaporator 5 is disposed in a space leading to the vehicle compartment. The expansion device 4 e.g. is disposed at a partition wall separating between the compartment and the engine room.

When the automotive air conditioner is operated, first, the electromagnetic valve 7 of the expansion device 4 is fully opened. The compressed refrigerant enters the receiver/dryer 3 after being condensed by the condenser 2, and is subjected to gas-liquid separation by the receiver/dryer 3. The liquid refrigerant phase obtained by the gas-liquid separation passes through the electromagnetic valve 7 to enter the expansion valve 8, where it is throttled and expanded to enter the evaporator 5. Then, after evaporating in the evaporator 5, the refrigerant passes through the check valve 9 to return to the compressor 1.

When the operation of the automotive air conditioner is stopped, first, the electromagnetic valve 7 is closed to block a refrigerant passage between the receiver/dryer 3 and the expansion valve 8. This prevents that compressed refrigerant from the compressor 1 will enter the expansion valve 8 and then the evaporator 5. When the compressor 1 has stopped and ceased to produce suction of refrigerant, and a not shown fan stops blowing air to the evaporator 5 to stop evaporation of refrigerant in the evaporator 5, the pressure present in the evaporator 5 becomes lower than the pressure on the suction side of the compressor 1. In this case, the check valve 9 is closed by the pressure difference to prevent refrigerant in the piping on the suction side of the compressor 1 from flowing back into the evaporator 5. This isolates the evaporator 5 disposed on the compartment side from the refrigeration cycle. Even if the evaporator 5 or the piping connected thereto should be broken by a crack due to aging or a rapture, it is prevented that all the refrigerant in the refrigeration cycle is released into the compartment in large amounts.

Further, when the evaporator 5 is broken or when for the vehicle a circumstance should occur under which the evaporator 5 could be broken, the release-to-atmosphere device 6 is operated, and if the automotive air conditioner should be in operation, energization of the electronic magnet valve 7 is simultaneously stopped. The electromagnetic valve 7 then will close and will stop any refrigerant flow to the evaporator 5 through the high-pressure piping. The release-to-atmosphere device 6 will open low-pressure piping on the suction side of the compressor 1 to the atmosphere to thereby release refrigerant from the refrigeration cycle into the atmosphere. Whenever the evaporator 5 falls into a state in which it breaks or can be broken, a high-pressure refrigerant flow from the evaporator 5 into the compartment is prevented and a refrigerant flow from the piping on the low-pressure side is also prevented from the evaporator 5 into the compartment.

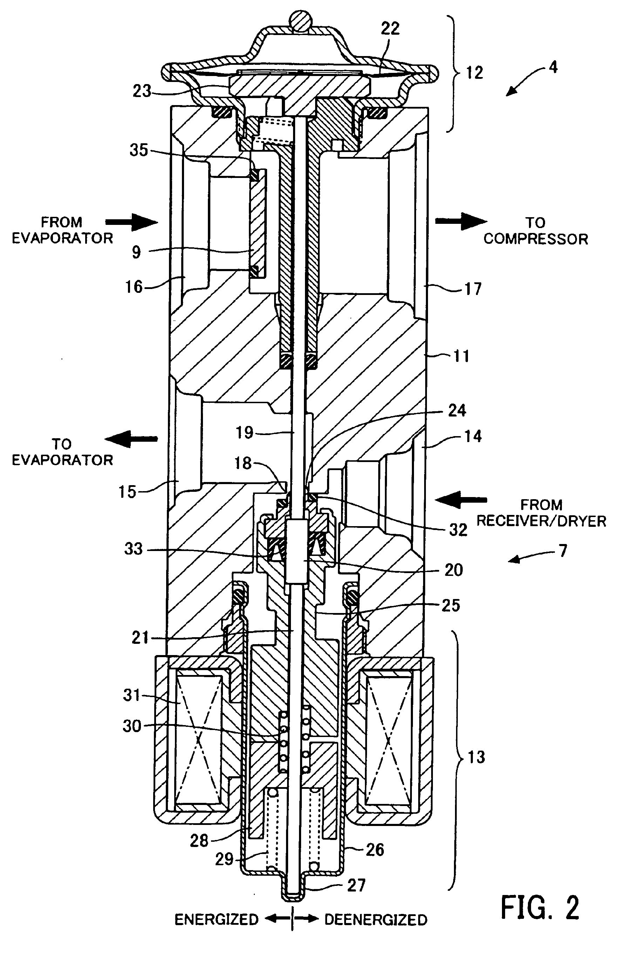

Fig. 2 simultaneously shows the electromagnetic closing function of the expansion device for blocking a low-pressure refrigerant passage and a state of a function thereof as a conventional expansion device having its opening controlled (right-hand side: a valve element and movable parts of a solenoid in a valve-closed state during de-energization of the expansion device), and a state operating as an expansion valve operation during energization of the expansion device (left-hand side).

The expansion device 4 comprises a body block 11 housing the electromagnetic valve 7 that forms the electrically-operated opening and closing section, and respective valve elements of the check valve 9 that forms the backflow-preventing section and the expansion valve 8, a power element 12 that senses temperature and pressure of refrigerant returning from the evaporator 5, and a solenoid 13 that switches the electromagnetic valve 7 between its electromagnetic closing function and its expansion valve function.

The body block 11 has a side port 14 for receiving high-temperature, high-pressure refrigerant from the condenser 2, a port 15 for supplying low-temperature, low-pressure refrigerant subjected to adiabatic expansion by the expansion device 4 to the evaporator 5, a port 16 for receiving refrigerant returned from the evaporator 5, and a port 17 for sending the refrigerant received through the port 16 to the compressor 1.

In a first refrigerant passage between the port 14 and the port 15, a valve seat 18 is integrally formed with the body block 11. Along the central axis of the body block 11, there are coaxially arranged a shaft 19 extending through a valve hole forming a valve seat 18, a valve element guide 20 having the same diameter as the valve hole, and a shaft 21 forming a drive shaft of the solenoid 13. An upper end of the shaft 19 is in abutment with a centre disk 23 disposed on a lower side of a diaphragm 22 of the power element 12.

A dual-purpose valve element 24 extends through the valve seat 18 from an upstream side thereof such that it can be brought into contact with the valve seat 18 and out of contact therefrom by being guided along the shaft 19 and the valve element guide 20. With this configuration, a gap between the valve seat 18 and the dual-purpose valve element 24 forms a variable orifice for throttling high-pressure refrigerant, whereby refrigerant is throttled and expanded when passing through the variable orifice.

The dual-purpose valve element 24 is held on a first iron core 25 of the solenoid 13 serving as a movable iron core. The first iron core 25 is disposed axially movable while being guided by a shaft 21. A lower end of the shaft 21 is supported by a bearing 27 formed in an iron core case 26 of the solenoid 13. Below the first iron core 25, there is arranged a second iron core 28 that is secured to the shaft 21 to operate as a fixed iron core. The second iron core 28 is urged upward by a spring 29. This spring 29 urges the shaft 19 such that the shaft 19 remains in constant contact with the power element 12. A spring 30 is interposed between the first and second iron cores 25, 28. This spring 30 urges the first iron core 25 in a direction away from the second iron core 28 to allow to maintain the fully-closed state of the valve seat 18 by constantly seating the dual-purpose valve element 24 held by the first iron core 25 on the valve seat 18. Outside the iron core case 26, there is arranged an electromagnetic coil 31. The electromagnetic coil 31 is energized to cause the first iron core 25 and the second iron core 28 to attract each other, whereby the dual-purpose valve element 24 and the shaft 19 are electromagnetically coupled to transmit the displacement of the diaphragm 22 of the power element 12 to the dual-purpose valve element 24.

The dual-purpose valve element 24 has an annular valve sheet 32 at a portion via which it is seated on the valve seat 18. In the fully-closed state caused by the urging force of the spring 30 when the solenoid 13 is de-energized, the valve sheet 32 seals between the dual-purpose valve element 24 and the valve seat 18, to substantially completely stop the flow of high-pressure refrigerant. A V packing 33 is disposed in a space formed between the dual-purpose valve element 24 and the first iron core 25, to prevent any internal leakage in the fully-closed state when high-pressure refrigerant introduced to the valve element guide 20 via a gap between the first iron core 25 and the shaft 21 would flow downstream of the valve section through a gap between the dual-purpose valve element 24 and the valve element guide 20 and between the dual-purpose valve element 24 and the shaft 19.

The check valve 9 is disposed in a low-pressure refrigerant passage between the port 16 that receives refrigerant returned from the evaporator 5 and the port 17 that returns the refrigerant to the compressor 1. In the illustrated example, the check valve 9 is disposed in a central second refrigerant passage communicating with a chamber below the diaphragm 22 provided for the power element 12, for sensing the temperature and pressure of refrigerant. Although not shown, the check valve 9 is formed integrally with legs, which are guided in valve-opening and valve closing directions by the inner wall of the refrigerant passage of the port 16. The check valve element (e.g. a plate or disk) is urged by a weak spring, not shown, in valve-closing direction. The check valve 9 has a flexible annular valve sheet 35 at a portion via which it is seated on a counter surface surrounding the mouth of the passage to the port 16. When the pressure in the evaporator 5 becomes lower than the pressure on the suction side of the compressor 1, the check valve 9 will close to isolate the evaporator 5 from the compressor 1.

Since the solenoid 13 is de-energized when the air conditioner is in stoppage, the first iron core 25 is urged by the spring 30 in a direction away from the second iron core 28. Then the dual-purpose valve element 24 held by the first iron core 25 seated on the valve seat 18.

During operation of the air conditioner, the solenoid 13 is energized. The first and second iron cores 25, 28 are attracted to each other, so that the dual-purpose valve element 24 is indirectly fixed to the shaft 19 that transmits the displacement of the diaphragm 22. At this time, since the first iron core 25 is moved toward the second iron core 28, the dual-purpose valve element 24 is moved away from the valve seat 18 and high-temperature, high-pressure refrigerant supplied from the receiver/dryer 3 to the port 14 flows through the gap between the dual-purpose valve element 24 and the valve seat 18 into the port 15. The high-temperature, high-pressure refrigerant is throttled and expanded into low-temperature, low-pressure refrigerant, and the resulting refrigerant is supplied from the port 15 to the evaporator 5.

The evaporator 5 causes the refrigerant to evaporate by exchanging heat with air in the compartment, and returns the evaporated refrigerant to the expansion device 4. The refrigerant returned from the evaporator 5 is received at the port 16 of the expansion device 4, passes through the central refrigerant passage, and is returned from the port 17 to the compressor 1. At this time, in the expansion device 4, the power element 12 senses the temperature and pressure of the refrigerant flowing from the evaporator 5, and transmits the displacement of the diaphragm 22 dependent on the temperature and pressure of the refrigerant to the dual-purpose valve element 24 via the shaft 19, the valve element guide 20, the shaft 21, and the first and second iron cores 25 and 28, to thereby control the flow rate of refrigerant.

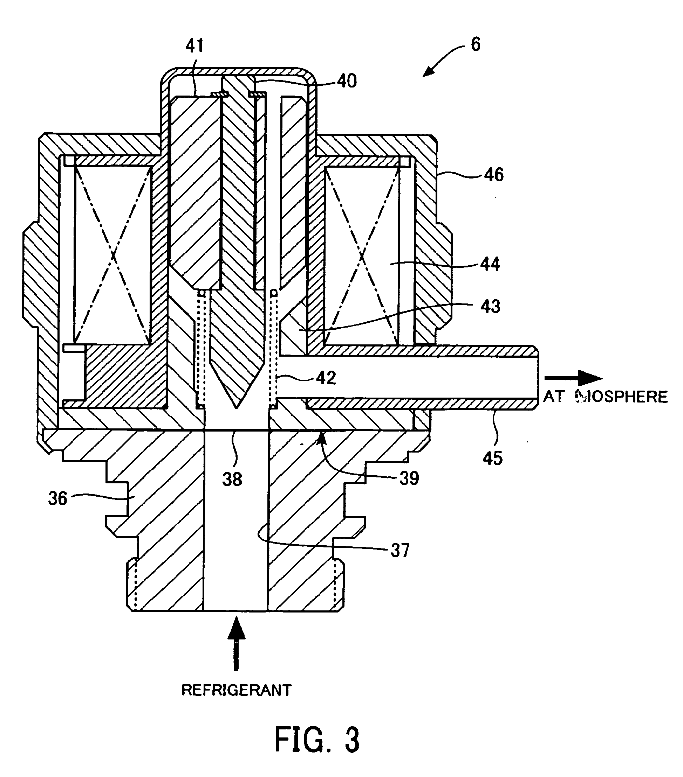

The release-to-atmosphere device 6 includes in Fig. 3 a body 36 forming a joint for connection to low-pressure piping on the suction side of the compressor 1.

The body 36 has an axial and central refrigerant inlet passage 37. A metal thin film 38 is disposed on an upper surface of the body 36 in a manner blocking the refrigerant inlet passage 37. The metal thin film 38 is welded to the body 36 e.g. by laser welding along a concentric circle passing through a point 39 outward of the refrigerant inlet passage 37, whereby the metal thin film 38 is gastightly sealed to the body 36 along the whole circumference.

Disposed above the body 36 is a solenoid forming a thin film-breaking section. More specifically, a piercing rod 40 is disposed in a manner movable forward and backward in a direction perpendicular to the surface of the metal thin film 38. This piercing rod 40 has a tip facing the metal thin film 38. The tip is formed such that it has a pointed shape. The piercing rod 40 is rigidly fixed to a movable core 41 of the solenoid. The movable core 41 is urged by a spring 42 in a direction away from a fixed core 43. The fixed core 43 has an axial hole receiving the piercing rod 40 and the spring 42 and a lower end, in Fig. 3, which is integrally formed with a flange portion protruding radially outward for forming a magnetic circuit and which has at least one horizontal hole above the flange position for permitting refrigerant to escape to the atmosphere.

A coil 44 is disposed around the outer peripheries of the movable core 41 and the fixed core 43. A bobbin for the coil 44 has a container containing the movable core 41 and the fixed core 43, and has a conduit 45 for releasing refrigerant into the atmosphere, the container and the conduit 45 being integrally formed with the bobbin e.g. by a resin. This conduit 45 e.g. has a hose connected thereto, to guide refrigerant to a suitable remoter location. Outside the coil 44, a yoke 46 for forming the magnetic circuit is disposed. The yoke 46 may be fixed to the body 36 by swaging.

When the release-to-atmosphere device 6 is on standby, no electric current is supplied to the coil 44. The movable core 41 is urged by the spring 42 in the direction away from the fixed core 43. The piercing rod 40 is placed in a standby position with its tip kept away from the metal thin film 38.

When refrigerant tends to enter into the compartment or when there is a possibility of a refrigerant flow into the compartment, a pulse current e.g. is supplied to the coil 44. The movable core 41 is attracted by the fixed core 43 against the urging force of the spring 42. The tip of the piercing rod 40 formed with an acute angle breaks through the metal thin film 38, so that refrigerant in the refrigeration cycle is instantly released into the atmosphere via the conduit 45.

When the pulse current ceases to be supplied to the coil 44, the movable core 41 is moved away from the fixed core 43 by the urging force of the spring 42. The piercing rod 40 is pushed back by refrigerant blowing out from the broken metal thin film 38. After that, the release-to-atmosphere device 6 automatically remains in the state open to the atmosphere. This prevents that refrigerant from the refrigeration cycle will reach the vehicle compartment in large or dangerous amounts. This prevents a suffocation accident by the released refrigerant, or a fire accident caused by a fire caught by the released refrigerant.

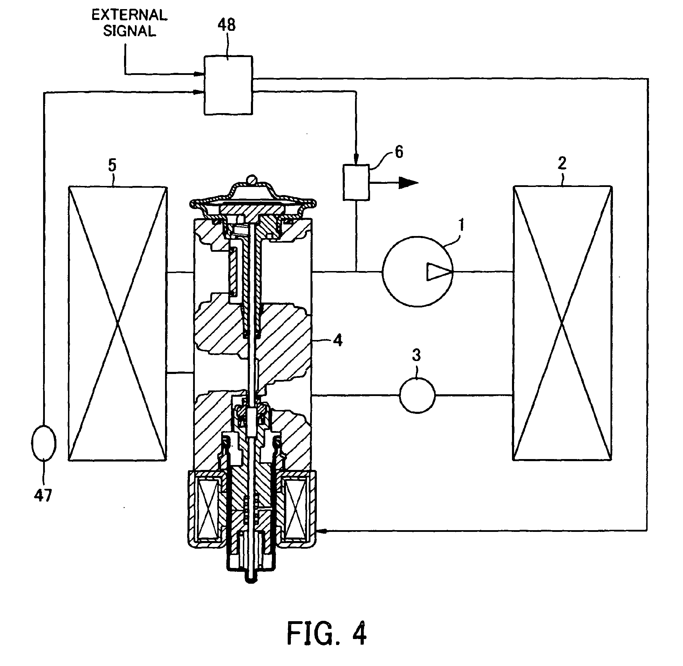

In the refrigeration system (Fig. 4), a refrigerant sensor 47 is disposed in the vicinity of the evaporator 5, for detecting the concentration of refrigerant e.g. in the compartment. The output of the refrigerant sensor 47 is connected to the input of a control device 48. The output of the control device 48 is connected to both the expansion device 4 and the release-to-atmosphere device 6 . When carbon dioxide is used as refrigerant, the refrigerant sensor 47 is implemented by a sensor that detects carbon dioxide, whereas when HFC-152a is used, the same is implemented by a sensor that detects HFC-152a. However, in the case of the sensor that detects carbon dioxide, it is possible to distinguish an increase in the concentration of carbon dioxide caused by a large amount of refrigerant released in a short time period from that caused by breathing of vehicle occupants, by not only simply detecting the concentration of carbon dioxide, but also by detecting a rate of increase in the concentration of carbon dioxide. Further, the control device 48 is configured to be capable of receiving an external signal. The external signal e.g. is output when a computer mounted on the vehicle detects that the vehicle has fallen into a state in which the evaporator 5 can be seriously damaged.

When the refrigerant sensor 47 detects an actual release of refrigerant from the evaporator 5, the control device 48, responsive to the detection signal, causes the expansion device 4 and the release-to-atmosphere device 6 to operate. That is, when the air conditioner is in stoppage, the control device 48 does not do anything to the expansion device 4, but when the same is in operation, the control device 48 turns off the power of the electromagnetic valve 7 to block the high-pressure piping to thereby isolate the evaporator 5 from the high-pressure piping. The control device 48 supplies pulse current to the release-to-atmosphere device 6 to cause the solenoid thereof to operate, whereby the metal thin film 38 is broken to allow refrigerant in the low-pressure piping to be released into the atmosphere outside the vehicle compartment. Of course, when the external signal indicative of an abnormality occurs at or in the vehicle is input from the vehicle computer, the electromagnetic valve 7 is similarly closed, and the release-to-atmosphere device 6 is opened to the atmosphere.

## Claims

1. A refrigeration system comprising
a compressor (1),
an evaporator (5) in a space leading to an inside of a vehicle compartment,
an expansion device (4) including an opening and closing section (7, 8) in a first refrigerant passage (14, 15) leading to an inlet of the evaporator (5),
a second refrigerant passage (16, 17) that allows refrigerant flowing from the evaporator (5) to pass therethrough,
the expansion device (4) in operation of the refrigeration system controlling the flow rate through the first refrigerant passage according to temperature and pressure of refrigerant in the second refrigerant passage (16, 17) by means of a power element (12) sensing temperature and pressure in the second refrigerant passage (16, 17), and by a shaft (19) transmitting displacements of the power element (12) to a valve element (24) cooperating with a valve seat (18) in the first refrigerant passage (14, 15),
**characterized in**
**that** the second refrigerant passage (16, 17) contains a backflow-preventing section (9) for preventing refrigerant being sucked by the compressor (1) when the refrigeration system stops operating and when the refrigeration system is in stoppage from flowing back to the evaporator (5),
**that** an electrically operated release-to-atmosphere device (6) is disposed in piping on a suction side of the compressor (1) for selectively releasing refrigerant in the piping on the suction side of the compressor (1) into the atmosphere,
**that** the opening and closing section (7, 8) of the expansion device (4) is electrically operated and comprises a normally-closed electromagnetic valve that blocks the first refrigerant passage (14, 15) when the refrigeration system stops operating and is in stoppage,
**that** the valve element (24) is an axially moveable dual-purpose valve element guided by the shaft (19) both for blocking the first refrigerant passage (14, 15) and for controlling the flow rate through the first refrigerant passage according to the respective displacement of the power element (12), and
**that** first and second iron cores (25, 28) are provided in the electromagnetic valve which are urged in the valve closing direction of the dual-purpose valve element when the electromagnetic valve is de-energized for blocking the first refrigerant passage (14, 15), the first and second cores (25, 28) being electromagnetically coupled, when the electromagnetic valve is energized to transmit motions of the shaft (19) to the dual purpose valve element for controlling the flow rate through the first refrigerant passage (14, 15).

2. Refrigeration system according to claim 1, **characterised in that** the electrically operated release-to-atmosphere device (6) is held automatically in a state open to the atmosphere even after the electrical operation is de-energized.

3. Refrigeration system according to claim 1, **characterised by** a refrigerant sensor (47) for detecting the refrigerant concentration outside the evaporator (5), particularly in the vehicle compartment, and by a control device (48) causing the operation of the opening and electromagnetic valve of the expansion device (4) and the release-to-atmosphere device (6) based on at least a detection signal output from the refrigerant sensor (47).

## Patentansprüche

1. Kühlsystem, mit
einem Kompressor (1),
einem Verdampfer (5) in einem zum Inneren eines Fahrzeuginnenraums führenden Raum,
einer Expansionsvorrichtung (4), einschließlich einer Öffnungs- und Schließsektion (7, 8) in einer ersten, zu einem Einlass des Verdampfers (5) führenden Kältemittelpassage (14, 15),
einer zweiten Kältemittelpassage (16, 17) zum Durchlassen von dem Verdampfer (5) strömenden Kältemittels,
wobei die Expansionsvorrichtung (4) im Betrieb des Kühlsystems die Strömungsrate durch die erste Kältemittelpassage unter Berücksichtigung der Temperatur und des Drucks des Kältemittels in der zweiten Kältemittelpassage (16, 17) mittels eines Kraftelementes (12) regelt, das die Temperatur und den Druck in der zweiten Kältemittelpassage (16, 17) abtastet und durch eine Welle (19) Versetzbewegungen des Kraftelementes (12) auf ein Ventilelement (24) überträgt, das mit einem Ventilsitz (18) in der ersten Kältemittelpassage (14, 15) zusammenwirkt,
**dadurch gekennzeichnet,**
**dass** die zweite Kältemittelpassage (16, 17) eine Rückströmungsverhinderungssektion (9) enthält, um zu verhindern, dass durch den Kompressor (1) angesaugtes Kältemittel zu dem Verdampfer (5) zurückströmt, wenn das Kühlsystem im Betrieb anhält und wenn sich das Kühlsystem in einem Betriebsstopp befindet,
**dass** in einer Verrohrung an einer Saugseite des Kompressors (1) eine elektrisch betätigbare Vorrichtung (6) zum Ablassen von Kältemittel in die Atmosphäre angeordnet ist, um wahlweise Kältemittel aus der Verrohrung an der Saugseite des Kompressors (1) in die Atmosphäre freizusetzen,
**dass** die Öffnungs- und Schließsektion (7, 8) der Expansionsvorrichtung (4) elektrisch betätigbar ist und ein normal geschlossenes elektromagnetisches Ventil enthält, das die erste Kältemittelpassage (14, 15) blockiert, wenn der Betrieb des Kühlsystems abgebrochen wird und dieses in einem Betriebsstopp ist,
**dass** das Ventilelement (24) ein axial bewegliches Mehrzweck-Ventilelement ist, das durch die Welle (19) geführt wird und sowohl zum Blockieren der ersten Kältemittelpassage (14, 15) als auch zum Regeln der Strömungsrate durch die erste Kältemittelpassage dient, entsprechend der jeweiligen Versetzbewegung des Kraftelementes (12), und
**dass** erste und zweite Eisenkerne (25, 28) in dem elektromagnetischen Ventil vorgesehen sind, welche zum Blockieren der ersten Kältemittelpassage (14, 15) in Ventilschließrichtung des Mehrzweck-Ventilelementes beaufschlagt werden, wenn das elektromagnetische Ventil stromlos ist, wohingegen die ersten und zweiten Kerne (25, 28) miteinander elektromagnetisch kuppelbar sind, wenn das elektromagnetische Ventil bestromt ist, um Bewegungen der Welle (19) auf das Mehrzweck-Ventilelement zum Regeln der Strömungsrate durch die erste Kältemittelpassage (14, 15) zu übertragen.

2. Kühlsystem gemäß Anspruch 1, **dadurch gekennzeichnet, dass** die elektrisch betätigbare Vorrichtung (6) zum Ablassen von Kältemittel in die Atmosphäre automatisch in einem zur Atmosphäre offenen Zustand haltbar ist, sogar nachdem die elektrische Operation stromlos gemacht worden ist.

3. Kühlsystem gemäß Anspruch 1, **gekennzeichnet durch** einen Kältemittelsensor (47) zum Detektieren der Kältemittelkonzentration außerhalb des Verdampfers (5), insbesondere in dem Fahrzeuginnenraum, und **durch** eine Steuervorrichtung (48) zum Bewirken der Betätigung des Öffnens des elektromagnetischen Ventils der Expansionsvorrichtung (4) und der Vorrichtung (6) zum Abgeben von Kältemittel in die Atmosphäre, basierend auf zumindest einem Detektionsausgabesignal von dem Kältemittelsensor (47).

## Revendications

1. Système de réfrigération comprenant :
un compresseur (1),
un évaporateur (5) dans un espace conduisant à un intérieur d'un compartiment de véhicule,
un dispositif d'expansion (4) comprenant une section d'ouverture et de fermeture (7, 8) dans un premier passage de réfrigérant (14, 15) conduisant à une entrée de l'évaporateur (5),
un second passage de réfrigérant (16, 17) qui permet au réfrigérant s'écoulant à partir de l'évaporateur (5) de passer à travers celui-ci,
le dispositif d'expansion (4), lorsque le système de réfrigération est en fonctionnement, contrôlant le débit par le biais du premier passage de réfrigérant selon la température et la pression du réfrigérant dans le second passage de réfrigérant (16, 17) au moyen d'un élément de puissance (12) détectant la température et la pression dans le second passage de réfrigérant (16, 17) et par un arbre (19) transmettant les déplacements de l'élément de puissance (12) à un élément de soupape (24) coopérant avec un siège de soupape (18) dans le premier passage de réfrigérant (14, 15),
**caractérisé en ce que** le second passage de réfrigérant (16, 17) comprend une section anti-retour (9) pour empêcher le réfrigérant d'être aspiré par le compresseur (1) lorsque le système de réfrigération arrête de fonctionner et lorsque le système de réfrigération est bouché pour s'écouler en arrière dans l'évaporateur (5),
**en ce qu'**un dispositif de libération dans l'atmosphère (6) actionné électriquement est disposé dans les tuyaux du côté d'aspiration du compresseur (1) pour libérer sélectivement le réfrigérant dans les tuyaux du côté de l'aspiration du compresseur (1) dans l'atmosphère,
**en ce que** la section d'ouverture et de fermeture (7, 8) du dispositif d'expansion (4) est actionnée électriquement et comprend une vanne électromagnétique fermée normalement qui bloque le premier passage de réfrigérant (14, 15) lorsque le système de réfrigération s'arrête de fonctionner et lorsqu'il est bouché,
**en ce que** l'élément de soupape (24) est un élément de soupape à double effet axialement mobile guidé par l'arbre (19) à la fois pour bloquer le premier passage de réfrigérant (14, 15) et pour commander le débit à travers le premier passage de réfrigérant selon le déplacement respectif de l'élément de puissance (12), et
**en ce que** l'on prévoit des premier et second noyaux de fer (25, 28) dans la soupape électromagnétique qui sont poussés dans la direction de fermeture de soupape de l'élément de soupape à double effet lorsque la soupape électromagnétique n'est plus excitée pour bloquer le premier passage de réfrigérant (14, 15), les premier et second noyaux (25, 28) étant couplés de manière électromagnétique, lorsque la soupape électromagnétique est excitée pour transmettre les mouvements de l'arbre (19) à l'élément de soupape à double effet pour commander le débit à travers le premier passage de réfrigérant (14, 15).

2. Système de réfrigération selon la revendication 1, **caractérisé en ce que** le dispositif de libération dans l'atmosphère (6) actionné électriquement est maintenu automatiquement dans un état ouvert à l'atmosphère même après que l'actionnement électrique n'est plus excité.

3. Système de réfrigération selon la revendication 1, **caractérisé par** un capteur de réfrigérant (47) pour détecter la concentration de réfrigérant à l'extérieur de l'évaporateur (5), en particulier dans le compartiment du véhicule, et par un dispositif de commande (48) provoquant l'opération d'ouverture et de la soupape électromagnétique du dispositif d'expansion (4) et du dispositif de libération dans l'atmosphère (6) basée sur au moins un signal de détection produit par le capteur de réfrigérant (47).
